(19) Europäisches Patentamt / European Patent Office / Office européen des brevets

(11) **EP 4 208 378 B1**

(12) **EUROPEAN PATENT SPECIFICATION**

(45) Date of publication and mention
of the grant of the patent:
**19.03.2025  Bulletin 2025/12**

(21) Application number: **21782816.9**

(22) Date of filing: **03.09.2021**

(51) International Patent Classification (IPC):
**B60W 40/13** *(2012.01)*

(52) Cooperative Patent Classification (CPC):
**B60W 40/13;** B60W 2510/0657; B60W 2510/083;
B60W 2510/105; B60W 2520/10; B60W 2520/105;
B60W 2520/30; B60W 2552/15

(86) International application number:
**PCT/IB2021/058067**

(87) International publication number:
**WO 2022/049538 (10.03.2022 Gazette 2022/10)**

(54) **METHOD FOR ESTIMATING THE MASS OF A VEHICLE**

VERFAHREN ZUR SCHÄTZUNG DER MASSE EINES FAHRZEUGS

PROCÉDÉ D'ESTIMATION DE LA MASSE D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2020  IT 202000020950**

(43) Date of publication of application:
**12.07.2023  Bulletin 2023/28**

(73) Proprietor: **IVECO S.P.A.**
**10156 Torino (IT)**

(72) Inventors:
• **NASR, Salma**
**10134 Torino (IT)**
• **RICCIO, Alessandro**
**10138 Torino (IT)**

(74) Representative: **Studio Torta S.p.A.**
**Via Viotti, 9**
**10121 Torino (IT)**

(56) References cited:
WO-A2-2015/004639    DE-A1- 102013 216 649
GB-A- 2 535 775    US-A1- 2014 244 120
US-A1- 2015 224 996

**Description**

<u>TECHNICAL FIELD</u>

The present invention relates to a method for estimating the mass of a vehicle, in particular a heavy vehicle such as a truck.

<u>STATE OF THE PRIOR ART</u>

Vehicles are known, in particular wheeled vehicles such as cars and trucks, which comprise electronic devices for determining the mass of the vehicles.

In detail, vehicles currently use a direct method of mass estimation, i.e., through dedicated weight sensors.

However, these sensors do not have sufficient features to meet the requirements of the new regulations in the sector. In fact, such regulations require high accuracy and a higher refresh rate compared to the systems currently in use.

In addition, ADAS (Advanced Driver Assistance Systems) systems are increasingly widespread, for example automatic driving systems, which also require high accuracy in estimating the mass of vehicles, in order to obtain a correct operation of the ADAS systems. Clearly, the value of the mass is necessary to allow the calculation of the braking distance/time or the drive torque such as to reach a predetermined speed or to maintain the acceleration of the vehicle in a predetermined range of comfort for the passengers.

Accordingly, vehicles are also known which incorporate On-Board Weighing Systems (OBW), capable of obtaining a direct and sufficiently accurate detection of the mass. However, these systems are additional devices to be housed on the vehicle, with consequent increase in costs, reduction in available space, and increase in vehicle production time.

Therefore, there is a need to provide a vehicle which comprises a system for estimating its mass accurately and at low cost.

The object of the present invention is to meet the above requirements in a cost-effective and optimized manner.

Document DE 10 2013 216649 A1 discloses a vehicle provided with a controller configured to generate an output indicative of a kinematic road gradient estimate using an extended Kalman filter.

<u>SUMMARY OF THE INVENTION</u>

The above object is achieved by a system and a method for estimating the mass as claimed in the appended claims.

<u>BRIEF DESCRIPTION OF THE DRAWINGS</u>

For a better understanding of the present invention, a preferred embodiment is described below by way of nonlimiting example and with reference to the accompanying drawings, wherein:

- Figure 1 shows a block diagram of the system for estimating the mass of a vehicle, according to the present invention;
- Figure 2 shows a diagram of the method for estimating the mass of a vehicle according to the present invention; and
- Figure 3 shows a detail of the diagram of the method for estimating the mass of a vehicle in Figure 2.

<u>DETAILED DESCRIPTION OF THE INVENTION</u>

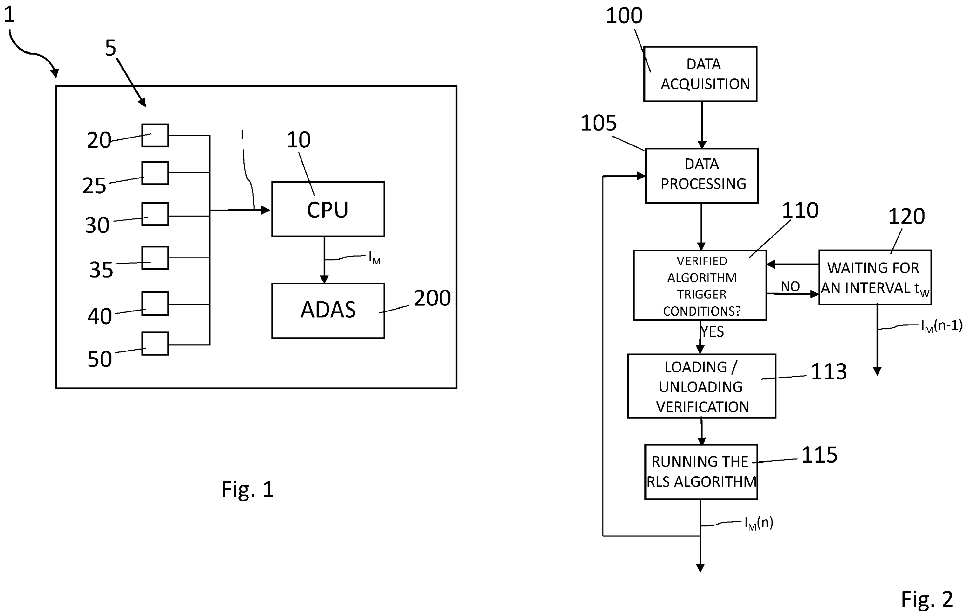

Figure 1 schematically shows a vehicle 1 comprising a plurality of sensors 5, each configured to acquire one or more respective quantities as a function of an operating condition of the vehicle 1 and configured to provide a plurality of electrical signals I, each as a function of such one or more quantities, to a processing unit 10.

In detail, the plurality of sensors 5 includes:

- an inclination sensor 20, configured to acquire a quantity relating to the angle of inclination $\theta$ of the vehicle 1 (due to the slope of the road travelled by the vehicle 1) and provide a corresponding electrical inclination signal $I_l$;
- a speed sensor 25, configured to detect the longitudinal speed v of the vehicle 1 and provide a corresponding electrical speed signal $I_v$;
- a drive torque sensor 30, configured to detect a quantity proportional to the value of the drive torque $T_{em}$ and provide a corresponding electrical traction signal It;
- a braking state sensor 35, configured to detect whether the vehicle 1 is braking and provide a corresponding electrical braking signal $I_b$; and

- a state sensor 40 of the vehicle 1, configured to detect whether the vehicle 1 is on or off and provide a corresponding electrical state signal $I_s$;
- a door opening sensor 50, configured to detect whether a door of the vehicle 1, for example a rear or side door used to access the load space, is open or closed and provide a corresponding electrical door opening signal $I_c$.

The plurality of electrical signals I, for example, can be supplied by the plurality of sensors 5 to the processing unit 10 via a CAN-type ("Controller Area Network") bus.

According to the present invention, the processing unit 10 is configured to determine, starting from the plurality of electrical signals I, an estimate of the mass m of the vehicle 1, according to the method represented in the flow diagram of Figure 2, and generate at output a mass signal $I_M$ as a function of the estimation of the mass m.

In detail, the present method is based on the equation Eq of longitudinal dynamic equilibrium of the vehicle 1. For example, the equation Eq can take the following form:

$$m \cdot g \cdot sen(\theta) + m \cdot F_0 \cdot cos(\theta) + ma + F_2 v^2 = AT_{em},$$

wherein:

- g is the gravitational acceleration constant, equal to 9.81 m/s$^2$;
- $F_0$ and $F_2$ are coefficients that depend on frictions inside and outside the vehicle 1 and can vary according to the type of vehicle and the configuration of the vehicle 1;
- A is a known coefficient, linked to the transmission of the drive torque $T_{em}$, for example taking into account the radius of the wheels and the transmission ratio of the vehicle 1;
- m is the mass of the vehicle 1 to be determined; *and*
- θ, v and a are the angle of inclination, the longitudinal speed, and the longitudinal acceleration, respectively, of the vehicle 1, determined by the plurality of sensors 5, as indicated above.

The equation Eq can be rewritten in terms of a cost function C(m), obtained as the difference between a first function F(m), comprising a first group of terms of the equation Eq that depend on the unknown mass m of the vehicle 1, and a second function G, comprising a second group of terms of the equation Eq that do not depend on the mass m of the vehicle 1, according to the relation C(m) = F(m) - G.

In detail, the first function F(m) comprises the sum of a first term $m \cdot g \cdot sen(\theta)$, a second term $m \cdot F_0 \cdot cos(\theta)$ and a third term $m \cdot a$, *i.e.:*

$$\mathrm{F(m) = m \cdot g \cdot sen(\theta) + m \cdot F_0 \cdot cos(\theta) + m \cdot a.}$$

The first term $m \cdot g \cdot sen(\theta)$ and the second term $m \cdot F_0 \cdot cos(\theta)$ depend on the mass m of the vehicle 1, as well as on the angle of inclination θ. Likewise, the third term $ma$ depends on the mass m of the vehicle 1, as well as on its longitudinal acceleration a.

In this embodiment, the longitudinal acceleration a is obtained starting from the electrical speed signal $I_v$.

According to one aspect of the present invention, the longitudinal acceleration a can be detected directly through a dedicated sensor.

The second function G comprises the difference between a fourth term $A \cdot T_{em}$ and a fifth term $F_2 \cdot v^2$ of the equation Eq, i.e., :

$$\mathrm{G = A \cdot T_{em} - F_2 \cdot v^2,}$$

which are a function of the drive torque $T_{em}$ and the longitudinal speed v of the vehicle 1, respectively, therefore do not depend on the mass m.

It follows that a minimization algorithm, applied to the cost function C(m), is able to determine, at output, the unknown coefficients that minimize the cost function C(m); that is, in this case, the mass m of the vehicle 1.

In detail, in this embodiment, the processing unit 10 uses, as minimization algorithm, a Recursive Least Squares (RLS) algorithm, known to the person skilled in the art and therefore not further described.

The RLS algorithm is recursive and requires an initial mass value $m_0$ to calculate the estimated mass value $m_n$ in a given iteration n (current iteration n). The initial mass value $m_0$ can be a fixed initial mass value, for example in the case of initial configuration of the vehicle 1, or a mass value $m_{n-1}$ estimated in a previous iteration n-1, stored in a memory internal or external to the processing unit 10.

Here, the processing unit 10 uses the estimated mass value $m_{n-1}$, calculated in the previous iteration n-1, as the

initial mass value $m_0$ for the current iteration n.

As regards the RLS algorithm, in the current iteration n, the first function F(m) of the cost function C(m) can be expressed as F(m) = $\Phi \cdot m_{n-1}$, wherein $\Phi = g \cdot sen(\theta) + F_0 \cdot cos(\theta)$ + a represents the known portion of the first function F(m), i.e., the sum of the elements of the first, the second and the third terms $m \cdot g \cdot sen(\theta)$, $m \cdot F_0 \cdot cos(\theta)$ and $m \cdot a$, which are multiplied by the mass $m_{n-1}$ estimated in the previous iteration n-1. As shown schematically in Figure 2, the present method for estimating the mass m of the vehicle 1 comprises an acquisition step 100 in which the plurality of electrical signals I is supplied to the processing unit 10.

The plurality of electrical signals I are continuously supplied to the processing unit 10.

Subsequently, in the processing step 105, the processing unit 10 processes the values of each signal of the plurality of electrical signals I received in a time window of duration $t_s$. For example, the processing unit 10, in the time window of duration $t_s$, can perform a moving average of the values of each signal of the plurality of electrical signals I. Moreover, in the processing step 105, the processing unit 10 determines the value of the known portion $\Phi$ of the first function F(m) and the value of the second function G, by using the gravitational acceleration constant g and the coefficients A, $F_0$ and $F_2$, which can also be stored in a memory internal or external to the processing unit 10.

A verification step 110 follows, in which the processing unit 10 verifies that a group of algorithm trigger conditions are satisfied.

In detail, checking the group of algorithm trigger conditions includes verifying that:

- the braking signal $I_b$ indicates that the vehicle 1 is not braking;
- the speed signal $I_v$ indicates that the longitudinal speed v of the vehicle 1 is greater than a threshold speed, which can be determined through a suitable calibration;

- the value of the known portion $\Phi$ of the first function F(m) is within a predetermined range, which can also be determined through a suitable calibration; and
- the signals used to determine the cost function C(m) ($I_v$, $I_i$, It) are correctly supplied to the processing unit 10.

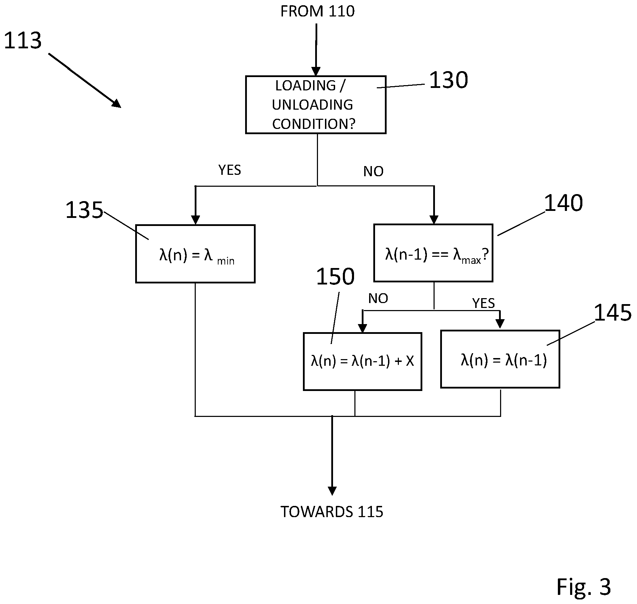

If each condition of the group of algorithm trigger conditions is satisfied, a loading/unloading verification step 113, described in detail below with reference to Figure 3, and an estimation step 115 follow, in which the processing unit 10 calculates the cost function C(m) and executes the RLS algorithm.

The RLS algorithm then generates at output an estimate of the mass m of the vehicle 1 for the current iteration n, as described above.

If in the verification step 110 at least one of the algorithm triggering conditions is not verified, the vehicle 1 is in an operating condition which would not allow an accurate estimate of the mass m. For example, in fact, if the longitudinal speed v is too low, i.e., lower than the threshold speed, the vehicle 1 is starting, or if the vehicle 1 is braking, the longitudinal acceleration a varies very quickly and the estimate is not sufficiently accurate.

Consequently, in the event that the verification step 110 has given a negative result, the processing unit 10 does not execute the RLS algorithm (estimation step 115), but waits (waiting step 120) for a waiting interval $t_w$ greater than or equal to, in this case equal to, the duration $t_s$ of the time window.

During the waiting interval $t_w$, the processing unit 10 stores the estimated mass value calculated in the previous iteration n-1. Consequently, the mass signal $I_M$ supplied by the processing unit 10 also corresponds to the estimated mass value calculated in the previous iteration n-1.

Once the waiting interval $t_w$ ends, the verification step 110 is performed again.

In addition, the RLS algorithm takes into account conditions that could substantially modify the mass of the vehicle through a forgetting factor $\lambda$, comprised between 0 and 1, which is used as weight for the initial mass value $m_0$ in each iteration of the estimation method.

In detail, a forgetting factor $\lambda$ value close to 0 assigns a low weight to the initial mass value $m_0$, i.e., to the mass value estimated in the previous iteration n-1. This is particularly useful after a variation in the mass m of the vehicle 1, for example after loading/unloading steps.

In fact, if the initial mass value $m_0$ used by the RLS algorithm is very different from the actual value of the mass m, the RLS algorithm may have convergence problems, for example, the time it takes the algorithm to correctly estimate the mass m could be too long.

Conversely, a forgetting factor $\lambda$ value close to 1 assigns a high weight to the initial mass value $m_0$, i.e., to the mass value estimated in the previous iteration n-1. This is particularly useful if the vehicle 1 is in a stationary state, in which the mass m does not undergo variations, for example, while driving.

In fact, if the initial mass value $m_0$ of the RLS algorithm is very close to the actual mass value m, the present method allows an estimate of the mass m with high accuracy, for example, with an error smaller than 1%.

Accordingly, as stated above and shown in Figure 3, after the verification step 110 and before the estimation step 115, the processing unit 10 performs the loading/unloading verification step 113, which comprises verifying a set of loading/unloading conditions (loading/unloading conditions verification step 130), designed to predict whether the vehicle 1 has been subjected to a loading/unloading step.

For example, the set of loading/unloading conditions comprises examining whether the vehicle 1 has just been switched on, whether it has just started moving, or whether the door of the vehicle 1 used to access the load space has been opened/closed.

In detail, in order to check whether the vehicle has just been switched on, the processing unit 10 checks whether in the time window of duration $t_s$, the value of the state signal $I_s$ has switched between a value corresponding to the vehicle 1 in the off state and a value corresponding to the vehicle 1 in the on state.

In addition, in order to check whether the vehicle 1 has just started moving, the processing unit 10 checks whether in the time window of duration $t_s$, the speed signal $I_v$ has taken a value corresponding to a null longitudinal speed v.

In addition, in order to check whether the door of the vehicle 1 has been opened/closed, the processing unit 10 checks whether in the time window of duration $t_s$, the door opening signal $I_c$ has taken a value indicating the opening of the door. In an exemplary variant, this condition is verified only if a minimum time $t_c$ (preferably a multiple of $t_s$) has elapsed between the value indicating the opening of the door and a corresponding value of the door opening signal $I_c$ indicating the closing of the door, so that a loading/unloading operation could have been performed.

If at least one of the sets of loading/unloading conditions is verified, i.e., output "YES" from the loading/unloading conditions verification step 130, then it is possible/probable that the vehicle 1 has been subjected to loading/unloading and therefore to a mass variation. In this case, i.e. possible loading/unloading step 135, the forgetting factor $\lambda$ of the current iteration n is set to a minimum value, much less than 1, for example equal to approximately 0.6.

The estimation step 115 is then performed.

If the loading/unloading conditions are not verified (output "NO" from the loading/unloading conditions verification step 130), the vehicle is in an operating condition in which the load is stationary as well as the mass m.

In this condition, the processing unit 10 checks whether the forgetting factor A(n-1) of the previous iteration n-1 is equal to a maximum value, for example close to 1, in particular 0.99, which can be determined through of a suitable calibration (forgetting factor verification step 140).

In affirmative case (step 145), the value of the forgetting factor $\lambda(n)$ of the current iteration n is kept equal to the value of the forgetting factor $\lambda(n-1)$ of the previous iteration n-1.

If not (step 150), the value of the forgetting factor $\lambda(n)$ of the current iteration n is increased by an amount X with respect to the value of the forgetting factor $\lambda(n-1)$ of the previous iteration n-1.

For example, the amount X can be kept constant for each iteration, so that the forgetting factor $\lambda$ increases from the minimum value to the maximum value, following a ramp.

The amount X, and therefore, for example, the speed of the ramp between the minimum value and the maximum value of the forgetting factor $\lambda$, can be determined, during calibration, in order to ensure an appropriate compromise between the speed of convergence of the estimated mass value and the actual mass value and the mass estimation accuracy under stationary load conditions.

The estimation step 115 is then performed.

With reference again to Figure 1, the vehicle 1 further comprises an ADAS system 200 configured to receive, from the processing unit 10, the mass signal $I_M$ as a function of the mass m of the vehicle 1, estimated by the processing unit 10.

The ADAS system 200 therefore receives an accurate estimate of the mass m of the vehicle 1 with a sufficient refresh rate.

Consequently, the ADAS system 200 can be configured, for example, to allow the braking of the vehicle 1 in the required space/time or to provide a drive torque such as to allow a predetermined speed to be reached, or also to maintain the acceleration of the vehicle 1 in a predetermined range of comfort.

Lastly, it is clear that modifications and variations may be made to the vehicle 1 and the method according to the present invention, without however departing from the scope of protection defined by the claims.

For example, the plurality of sensors 5 can provide additional quantities associated with the dynamic equation of longitudinal equilibrium of the vehicle 1, which are useful for estimating the mass m of the vehicle.

For example, the plurality of sensors 5 can provide quantities associated with the dynamic equation of longitudinal equilibrium of the vehicle which differ according to the type of vehicle.

For example, the minimization algorithm can provide further output results in addition to the mass m of the vehicle 1, for example an estimate of the mass estimation error.

For example, the processing unit 10 may use a different, recursive or non-recursive, minimization algorithm.

## Claims

1. A method for estimating the mass of a vehicle (1),

the vehicle comprising a plurality of sensors (5) each configured to detect at least one quantity depending on an operating condition of the vehicle and a processing unit (10) configured to receive electrical signals (I) from the plurality of sensors,
the method including:

• detecting (100), by the plurality of sensors (5), a plurality of quantities comprising quantities which are a function of the angle of inclination ($\theta$), the longitudinal speed (v), the longitudinal acceleration (a) and the drive torque ($T_{em}$) of the vehicle;
• providing, from the plurality of sensors (5), electrical signals (I) depending on the plurality of quantities, to the processing unit (10);
• processing (105), by the processing unit (10), the electrical signals as a function of the plurality of quantities, to determine a cost function (C(m)) associated with a dynamic equation of longitudinal equilibrium of the vehicle, the cost function being a function of the mass of the vehicle;
• executing (115), by the processing unit (10), a minimization algorithm of the cost function; and
• determining the mass of the vehicle resulting from the minimization algorithm,

wherein the cost function is given by the difference between a first and a second function (F(m), G), the first function (F(m)) comprising a known portion ($\Phi$) and being given by the sum of a first group of terms and the second function (G) being given by the sum of a second group of terms, the first group of terms being a function of the mass of the vehicle and wherein the cost function minimization algorithm is performed iteratively,
wherein the electrical signals also comprise a braking signal and wherein, before executing the cost function minimization algorithm, an algorithm trigger condition including checking if the vehicle is braking is verified (110), the algorithm trigger condition being satisfied if the braking signal indicates that the vehicle is not braking.

2. The method according to the preceding claim, wherein the first group of terms comprises a first and a second term which are a function of the angle of inclination ($\theta$) of the vehicle and a third term which is a function of the longitudinal acceleration (a) of the vehicle (1) according to the relation:

$$F(m) = m \cdot g \cdot sen(\theta) + m \cdot F_0 \cdot cos(\theta) + m \cdot a$$

wherein the known portion of the first function is given by $\Phi = g \cdot sen(\theta) + F_0 \cdot cos(\theta) + a$ and wherein the second group of terms includes a fourth term as a function of the drive torque ($T_{em}$) of the vehicle and a fifth term as a function of the longitudinal speed (v) of the vehicle according to the relation:

$$G = A \cdot T_{em} - F_2 \cdot v^2,$$

wherein g is the gravitational acceleration constant, m is the mass of the vehicle, A is a drive torque transmission coefficient of the vehicle, and $F_0$ and $F_2$ are coefficients that depend on internal and external frictions of the vehicle (1).

3. The method according to any of the preceding claims, wherein the electrical signals further comprise a longitudinal speed signal and wherein the algorithm trigger condition is satisfied only if the longitudinal speed signal indicates that the longitudinal speed of the vehicle is greater than a respective threshold value, if the braking signal indicates that the vehicle is not braking, if the value of the known portion ($\Phi$) of the first function (F(m)) is within a calibration interval and if the electrical signals are correctly provided to the processing unit.

4. The method according to any of the preceding claims, wherein if at least one of the algorithm trigger conditions is not satisfied, the processing unit provides a mass signal indicating a mass estimated in a previous iteration (n-1), for a waiting time interval ($t_w$) of a duration greater than or equal to the duration (ts) of a time window for processing the electrical signals.

5. The method according to any of the preceding claims, wherein the minimization algorithm is a recursive least squares algorithm.

6. The method according to the preceding claim, wherein the recursive least squares algorithm comprises a forgetting factor ($\lambda$) having a minimum value and a maximum value, the method further comprising verifying (130), before executing the minimization algorithm (115), if the vehicle has been subjected to loading/unloading operations and, in this case, setting the forgetting factor to the minimum value.

7. The method according to the preceding claim, wherein verifying whether the vehicle has been subjected to loading/unloading operations comprises verifying, in the time window, the longitudinal speed and the state of the vehicle.

8. The method according to the preceding claim, wherein verifying whether the vehicle has been subjected to loading/unloading operations comprises verifying whether, in the time window, the longitudinal speed of the vehicle assumes a null value and/or whether the vehicle switches from the off state to the on state.

9. The method according to any one of claims 6-8, wherein, if the step of verifying whether the vehicle has been subjected to loading/unloading operations gives a negative result and if a value of the forgetting factor of a previous iteration (n-1) is smaller than the maximum value, the value of the forgetting factor of a current iteration (n) is set equal to the value of the forgetting factor of the previous iteration (n-1) increased by an amount (X).

10. The method according to any one of claims 6-9, wherein the maximum value of the forgetting factor is 0.99 and the minimum value of the forgetting factor is 0.6.

11. A system comprising a vehicle (1) having a plurality of sensors (5), each configured to detect at least one quantity depending on an operating condition of the vehicle, and a processing unit (10) configured to receive electrical signals (I) from the plurality of sensors (5), the system being configured to perform the method for estimating the mass of the vehicle according to any one of the preceding claims.

12. The system according to the preceding claim, wherein the vehicle (1) further comprises an advanced driver assistance system (200), configured to receive an electrical signal ($I_M$) indicative of the mass of the vehicle (1), from the processing unit (10).

13. The system according to one of claims 11 or 12, wherein the vehicle (1) is a heavy vehicle.

## Patentansprüche

1. Verfahren zum Schätzen der Masse eines Fahrzeugs (1),

welches Fahrzeug eine Vielzahl von Sensoren (5) umfasst, die jeweils konfiguriert sind, mindestens eine Größe zu erfassen, die von einem Betriebszustand des Fahrzeugs abhängt, und eine Verarbeitungseinheit (10), die konfiguriert ist, elektrische Signale (I) von der Vielzahl der Sensoren zu empfangen,
das Verfahren umfassend:

- Erfassen (100) durch die Vielzahl von Sensoren (5) einer Vielzahl von Größen, die Größen umfassen, die eine Funktion des Neigungswinkels ($\theta$), der Längsgeschwindigkeit (v), der Längsbeschleunigung ($\underline{a}$) und des Antriebsmoments ($T_{em}$) des Fahrzeugs sind;
- Bereitstellen elektrischer Signale (I), die von der Vielzahl der Größen abhängen, von der Vielzahl der Sensoren (5) an die Verarbeitungseinheit (10);
- Verarbeiten (105) der elektrischen Signale durch die Verarbeitungseinheit (10) als Funktion der Vielzahl der Größen zum Bestimmen einer Kostenfunktion (C(m)), die mit einer dynamischen Gleichung des Längsgleichgewichts des Fahrzeugs verknüpft ist, wobei die Kostenfunktion eine Funktion der Masse des Fahrzeugs ist;
- Ausführen (115) eines Minimierungsalgorithmus der Kostenfunktion durch die Verarbeitungseinheit (10); und
- Bestimmen der aus dem Minimierungsalgorithmus resultierenden Masse des Fahrzeugs,

wobei die Kostenfunktion durch die Differenz zwischen einer ersten und einer zweiten Funktion (F(m), G) gegeben ist, wobei die erste Funktion (F(m)) einen bekannten Anteil ($\phi$) umfasst und durch die Summe einer ersten Gruppe von Termen gegeben ist und die zweite Funktion (G) durch die Summe einer zweiten Gruppe von Termen gegeben ist, wobei die erste Gruppe von Termen eine Funktion der Masse des Fahrzeugs ist und wobei der Minimierungsalgorithmus der Kostenfunktion iterativ ausgeführt wird,
wobei die elektrischen Signale auch ein Bremssignal umfassen und wobei, vor dem Ausführen des Minimierungsalgorithmus der Kostenfunktion, eine Auslösebedingung für den Algorithmus, die die Überprüfung einschließt, ob das Fahrzeug bremst, verifiziert wird (110), wobei die Auslösebedingung für den Algorithmus erfüllt ist, wenn das Bremssignal anzeigt, dass das Fahrzeug nicht bremst.

2. Verfahren nach dem vorhergehenden Anspruch, wobei die erste Gruppe von Termen einen ersten und einen zweiten Term umfasst, die eine Funktion des Neigungswinkels ($\theta$) des Fahrzeugs sind, und einen dritten Term, der eine Funktion der Längsbeschleunigung (a) des Fahrzeugs (1) ist, gemäß der Relation:

$$F(m) = m \cdot g \cdot sen(\theta) + m \cdot F_0 \cdot \cos(\theta) + m \cdot a$$

wobei der bekannte Anteil der ersten Funktion durch $\phi = g \cdot sen(\theta) + F_0 \cdot \cos(\theta) + a$ gegeben ist und wobei die zweite Gruppe von Termen einen vierten Term als Funktion des Antriebsmoments ($T_{em}$) des Fahrzeugs und einen fünften Term als Funktion der Längsgeschwindigkeit (v) des Fahrzeugs gemäß der Relation:

$$G = A \cdot T_{em} - F_2 \cdot v^2$$

umfasst,
wobei g die Gravitationsbeschleunigungskonstante, m die Masse des Fahrzeugs, A ein Übertragungskoeffizient des Antriebsmoments des Fahrzeugs und $F_0$ und $F_2$ Koeffizienten sind, die von einer inneren und äußeren Reibung des Fahrzeugs (1) abhängen.

3. Verfahren nach einem der vorhergehenden Ansprüche, wobei die elektrischen Signale ferner ein Längsgeschwindigkeitssignal umfassen und wobei die Auslösebedingung für den Algorithmus nur dann erfüllt ist, wenn das Längsgeschwindigkeitssignal anzeigt, dass die Längsgeschwindigkeit des Fahrzeugs größer als ein entsprechender Schwellenwert ist, wenn das Bremssignal anzeigt, dass das Fahrzeug nicht bremst, wenn der Wert des bekannten Anteils ($\phi$) der ersten Funktion (F(m)) innerhalb eines Kalibrierungsintervalls liegt und wenn die elektrischen Signale der Verarbeitungseinheit richtig bereitgestellt werden.

4. Verfahren nach einem der vorhergehenden Ansprüche, wobei, wenn mindestens eine der Auslösebedingungen für den Algorithmus nicht erfüllt ist, die Verarbeitungseinheit ein Massensignal bereitstellt, das eine in einer vorherigen Iteration (n-1) geschätzte Masse für ein Wartezeitintervall ($t_w$) von einer Dauer, die größer oder gleich der Dauer ($t_s$) eines Zeitfensters zur Verarbeitung der elektrischen Signale ist, anzeigt.

5. Verfahren nach einem der vorhergehenden Ansprüche, wobei der Minimierungsalgorithmus ein rekursiver Algorithmus der kleinsten Quadrate ist.

6. Verfahren nach dem vorhergehenden Anspruch, wobei der rekursive Algorithmus der kleinsten Quadrate einen Vergessensfaktor ($\lambda$) mit einem Minimal- und einem Maximalwert umfasst, wobei das Verfahren ferner umfasst, vor dem Ausführen des Minimierungsalgorithmus (115) zu überprüfen (130), ob das Fahrzeug Be- oder Entladevorgängen unterzogen wurde, und in diesem Fall den Vergessensfaktor auf den Minimalwert zu setzen.

7. Verfahren nach dem vorhergehenden Anspruch, wobei die Überprüfung, ob das Fahrzeug Be- oder Entladevorgängen unterzogen wurde, ein Überprüfen der Längsgeschwindigkeit und des Zustands des Fahrzeugs im Zeitfenster umfasst.

8. Verfahren nach dem vorhergehenden Anspruch, wobei das Überprüfen, ob das Fahrzeug Be- oder Entladevorgängen unterzogen wurde, ein Überprüfen umfasst, ob die Längsgeschwindigkeit des Fahrzeugs im Zeitfenster einen Nullwert annimmt und/oder ob das Fahrzeug vom ausgeschalteten Zustand in den eingeschalteten Zustand wechselt.

9. Verfahren nach einem der Ansprüche 6-8, wobei, wenn der Schritt des Überprüfens, ob das Fahrzeug Be- oder Entladevorgängen unterzogen wurde, ein negatives Ergebnis ergibt und wenn der Wert des Vergessensfaktors einer vorherigen Iteration (n-1) kleiner als der Maximalwert ist, der Wert des Vergessensfaktors einer aktuellen Iteration (n) auf den Wert des Vergessensfaktors der vorherigen Iteration (n-1) erhöht um einen Betrag (X) gesetzt wird.

10. Verfahren nach einem der Ansprüche 6-9, wobei der Maximalwert des Vergessensfaktors 0,99 und der Minimalwert des Vergessensfaktors 0,6 beträgt.

**11.** System, umfassend ein Fahrzeug (1) mit einer Vielzahl von Sensoren (5), die jeweils konfiguriert sind, mindestens eine Größe zu erfassen, die von einer Betriebsbedingung des Fahrzeugs abhängt, und einer Verarbeitungseinheit (10), die konfiguriert ist, elektrische Signale (I) von der Vielzahl der Sensoren (5) zu empfangen, wobei das System konfiguriert ist, das Verfahren zum Schätzen der Masse des Fahrzeugs gemäß einem der vorhergehenden Ansprüche auszuführen.

**12.** System nach dem vorhergehenden Anspruch, wobei das Fahrzeug (1) ferner ein fortgeschrittenes Fahrerassistenzsystem (200) umfasst, das konfiguriert ist, ein elektrisches Signal ($I_M$) zu empfangen, das die Masse des Fahrzeugs (1) anzeigt und von der Verarbeitungseinheit (10) stammt.

**13.** System gemäß einem der Ansprüche 11 oder 12, wobei das Fahrzeug (1) ein Schwerlastfahrzeug ist.

**Revendications**

**1.** Méthode pour estimer la masse d'un véhicule (1),

le véhicule comprenant une pluralité de capteurs (5) chacun configuré pour détecter au moins une quantité dépendant d'une condition de fonctionnement du véhicule et une unité de traitement (10) configurée pour recevoir des signaux électriques (I) à partir de la pluralité de capteurs,
la méthode comportant :

- la détection (100), par la pluralité de capteurs (5), d'une pluralité de quantités comprenant des quantités qui sont fonction de l'angle d'inclinaison ($\theta$), de la vitesse longitudinale (v), de l'accélération longitudinale ($\underline{a}$) et du couple d'entraînement ($T_{em}$) du véhicule ;
- la fourniture, à partir de la pluralité de capteurs (5), de signaux électriques (I) dépendant de la pluralité de quantités, à l'unité de traitement (10) ;
- le traitement (105), par l'unité de traitement (10), des signaux électriques en fonction de la pluralité de quantités, pour déterminer une fonction de coût (C(m)) associée à une équation dynamique d'un équilibre longitudinal du véhicule, la fonction de coût étant fonction de la masse du véhicule ;
- l'exécution (115), par l'unité de traitement (10), d'un algorithme de minimisation de la fonction de coût ; et
- la détermination de la masse du véhicule résultant de l'algorithme de minimisation,

dans laquelle la fonction de coût est donnée par la différence entre une première et une seconde fonction (F(m), G), la première fonction (F(m)) comprenant une partie connue ( $\overline{\Phi}$ ) et étant donnée par la somme d'un premier groupe de termes et la seconde fonction (G) étant donnée par la somme d'un second groupe de termes, le premier groupe de termes étant fonction de la masse du véhicule et dans laquelle l'algorithme de minimisation de fonction de coût est réalisé de manière itérative,
dans laquelle les signaux électriques comprennent également un signal de freinage et dans laquelle, avant l'exécution de l'algorithme de minimisation de fonction de coût, une condition de déclenchement d'algorithme comportant le fait de contrôler si le véhicule est en train de freiner est vérifiée (110), la condition de déclenchement d'algorithme étant satisfaite si le signal de freinage indique que le véhicule n'est pas en train de freiner.

**2.** Méthode selon la revendication précédente, dans laquelle le premier groupe de termes comprend un premier et un deuxième terme qui sont fonction de l'angle d'inclinaison ($\theta$) du véhicule et un troisième terme qui est fonction de l'accélération longitudinale (a) du véhicule (1) conformément à la relation :

$$F(m) = m \cdot g \cdot sen(\theta) + m \cdot F_0 \cdot cos(\theta) + m \cdot a$$

dans laquelle la partie connue de la première fonction est donnée par $\overline{\Phi}$ = g·sen($\theta$) + $F_0$·cos($\theta$) + a et dans laquelle le second groupe de termes comporte un quatrième terme en fonction du couple d'entraînement ($T_{em}$) du véhicule et un cinquième terme en fonction de la vitesse longitudinale (v) du véhicule conformément à la relation :

$$G = A \cdot T_{em} - F2 \cdot v^2,$$

dans laquelle g est la constante d'accélération de la pesanteur, m est la masse du véhicule, A est un coefficient de transmission de couple d'entraînement du véhicule et $F_0$ et $F_2$ sont des coefficients qui dépendent de frottements internes et externes du véhicule (1).

3. Méthode selon l'une quelconque des revendications précédentes, dans laquelle les signaux électriques comprennent en outre un signal de vitesse longitudinale et dans laquelle la condition de déclenchement d'algorithme est satisfaite uniquement si le signal de vitesse longitudinale indique que la vitesse longitudinale du véhicule est supérieure à une valeur de seuil respective, si le signal de freinage indique que le véhicule n'est pas en train de freiner, si la valeur de la partie connue ($\overline{\Phi}$) de la première fonction (F(m)) est dans un intervalle d'étalonnage et si les signaux électriques sont correctement fournis à l'unité de traitement.

4. Méthode selon l'une quelconque des revendications précédentes, dans laquelle si au moins une des conditions de déclenchement d'algorithme n'est pas satisfaite, l'unité de traitement fournit un signal de masse indiquant une masse estimée dans une itération précédente (n-1), pour un intervalle de temps d'attente ($t_w$) d'une durée supérieure ou égale à la durée (ts) d'une fenêtre de temps pour traiter les signaux électriques.

5. Méthode selon l'une quelconque des revendications précédentes, dans laquelle l'algorithme de minimisation est un algorithme des moindres carrés récursif.

6. Méthode selon la revendication précédente, dans laquelle l'algorithme des moindres carrés récursif comprend un facteur d'oubli ($\lambda$) ayant une valeur minimale et une valeur maximale, la méthode comprenant en outre le fait de vérifier (130), avant l'exécution de l'algorithme de minimisation (115), si le véhicule a été soumis à des opérations de chargement/déchargement et, dans ce cas, le réglage du facteur d'oubli à la valeur minimale.

7. Méthode selon la revendication précédente, dans laquelle le fait de vérifier si le véhicule a été soumis à des opérations de chargement/déchargement comprend la vérification, dans la fenêtre de temps, de la vitesse longitudinale et de l'état du véhicule.

8. Méthode selon la revendication précédente, dans laquelle le fait de vérifier si le véhicule a été soumis à des opérations de chargement/déchargement comprend le fait de vérifier si, dans la fenêtre de temps, la vitesse longitudinale du véhicule adopte une valeur nulle et/ou si le véhicule passe de l'état coupé à l'état en marche.

9. Méthode selon l'une quelconque des revendications 6 à 8, dans laquelle, si l'étape consistant à vérifier si le véhicule a été soumis à des opérations de chargement/déchargement donne un résultat négatif et si une valeur du facteur d'oubli d'une itération précédente (n-1) est inférieure à la valeur maximale, la valeur du facteur d'oubli d'une itération courante (n) est réglée pour être égale à la valeur du facteur d'oubli de l'itération précédente (n-1) augmentée d'une quantité (X).

10. Méthode selon l'une quelconque des revendications 6 à 9, dans laquelle la valeur maximale du facteur d'oubli est 0,99 et la valeur minimale du facteur d'oubli est 0,6.

11. Système comprenant un véhicule (1) ayant une pluralité de capteurs (5), chacun configuré pour détecter au moins une quantité dépendant d'une condition de fonctionnement du véhicule, et une unité de traitement (10) configurée pour recevoir des signaux électriques (I) à partir de la pluralité de capteurs (5), le système étant configuré pour réaliser la méthode pour estimer la masse du véhicule selon l'une quelconque des revendications précédentes.

12. Système selon la revendication précédente, dans lequel le véhicule (1) comprend en outre un système avancé d'assistance à la conduite (200), configuré pour recevoir un signal électrique ($I_M$) indiquant la masse du véhicule (1), à partir de l'unité de traitement (10).

13. Système selon l'une des revendications 11 ou 12, dans lequel le véhicule (1) est un véhicule lourd.

Fig. 2

- 100 DATA ACQUISITION
- 105 DATA PROCESSING
- 110 VERIFIED ALGORITHM TRIGGER CONDITIONS?
- 120 WAITING FOR AN INTERVAL $t_W$ — NO — $I_M(n-1)$
- YES
- 113 LOADING / UNLOADING VERIFICATION
- 115 RUNNING THE RLS ALGORITHM — $I_M(n)$

Fig. 1

- 1
- 5
- 20
- 25
- 30
- 35
- 40
- 50
- I
- 10 CPU
- $I_M$
- 200 ADAS

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102013216649 A1